# EUROPEAN PATENT APPLICATION

(11) **EP 4 755 501 A1**
(43) Date of publication of application: **10.06.2026**
(21) Application number: 25209175.6
(22) Date of filing: 16.10.2025
(51) Int. Cl.: B01F 29/10, H01M 4/04, B01F 35/71

(54) **MIXING DEVICE AND METHOD FOR SECONDARY BATTERY**

(30) Priority: 04.12.2024 KR 20240178569
(71) Applicant: SAMSUNG SDI CO., LTD., Yongin-si, Gyeonggi-do 17084 (KR)
(72) Inventor: AHN, Hye Jin, 16678 Suwon-si (KR); JANG, Kyeong Ho, 16678 Suwon-si (KR); LEE, Han Sol, 16678 Suwon-si (KR); HWANG, Ye Yeong, 16678 Suwon-si (KR)
(74) Representative: Marks & Clerk LLP

(57) **Abstract**

A mixing device for a secondary battery, the mixing device including a container part (10) storing a slurry (90), a driving part (20) configured to rotate the container part, and a mixing jig part (30) in the container part, wherein the slurry has a stirring hole (95) therein, the mixing jig part creating the stirring hole in the slurry, the stirring hole increasing a contact area of the slurry for an additive (99).

## Description

### BACKGROUND

### 1. Field

The present disclosure relates to a mixing device and a method for a secondary battery.

### 2. Description of the Related Art

The demand for portable electronic products such as laptop computers, video cameras, and portable phones increases rapidly, and robots, electric vehicles, and the like are commercialized. Thus, research on high-performance secondary batteries capable of being repeatedly charged and discharged is actively being conducted. In particular, lithium secondary batteries have a high energy density and a high operating voltage, have excellent preservation and lifetime characteristics, and thus are widely used as energy sources for various electronic products.

In a method of manufacturing a secondary battery, an electrode is formed using a coating method by uniformly dispersing and stirring electrode materials provided in liquid and powder forms, coating a current collector with the prepared slurry, and drying the coated slurry.

When an electrode slurry is being prepared, liquid and powder electrode materials including an electrode active material, a conductive material, a binder (thickener), and a solvent should be input into and physically and uniformly dispersed and mixed in a container of a mixing device.

The above-described information disclosed in the background technology of the present disclosure is only for improving understanding of the background of the present disclosure, and accordingly, can include information that does not constitute the related art.

### SUMMARY

Embodiments include a mixing device for a secondary battery, the mixing device including a container part storing a slurry, a driving part configured to rotate the container part, and a mixing jig part in the container part, wherein the slurry has a stirring hole therein, the mixing jig part creating the stirring hole in the slurry, the stirring hole increasing a contact area of the slurry for an additive.

The driving part may provide a revolution movement and a rotation movement to the container part.

The mixing jig part may include a mixing portion in the slurry creating the stirring hole, and a jig portion configured to move the mixing portion.

The mixing portion may include a first mixing portion pressed into the slurry to create the stirring hole.

The first mixing portion may include a first mixing mounting portion on the jig portion, and a first mixing protrusion connected to the first mixing mounting portion to create the stirring hole in the slurry.

The first mixing mounting portion may include a first mounting plate, a first mounting extension extending from the first mounting plate, and a first mounting support on the first mounting extension, the first mounting support having one or more first mixing protrusions connected thereto.

The first mixing protrusion may have a circular or polygonal cross section.

An end portion of the first mixing protrusion may have a pointed shape.

The mixing portion may include a second mixing portion configured to inject the additive into the slurry.

The second mixing portion may include a second mixing supply portion on the jig portion, the second mixing supply portion being supplied the additive, and a second mixing discharge portion connected to the second mixing supply portion, the second mixing discharge portion being in the slurry and discharging the additive into the slurry.

The second mixing supply portion may include a second supply storage portion storing the additive, and a second supply pressing portion that presses the additive stored in the second supply storage portion.

The second supply storage portion may include a second storage container portion storing the additive, and a second storage guide portion connected to the second storage container portion, the second storage guide portion having a second passage configured to guide the additive to the second mixing discharge portion.

The second supply storage portion may further include a second storage opening/closing portion configured to open or close the second passage so that the additive passes through the second passage when a pressure is greater than or equal to a set pressure.

The second supply pressing portion may include a second pressing support, and a second pressing insertion portion connected to the second pressing support, the second pressing insertion portion being in the second storage container portion.

The mixing portion may include a third mixing portion in the slurry, the third mixing portion configured to provide vibration energy or ultrasonic energy.

The third mixing portion may include a third mixing generating portion on the jig portion, the third mixing portion configured to generate vibration energy or ultrasonic energy when power is applied, and a third mixing transmitting portion that is connected to the third mixing generating portion, the third mixing transmitting portion creating the stirring hole in the slurry and transmitting the vibration energy or the ultrasonic energy generated by the third mixing generating portion.

The mixing portion may include a fourth mixing portion configured to rotate the slurry while in the slurry.

The fourth mixing portion may include a fourth mixing mounting portion on the jig portion, a fourth mixing rotating portion on the fourth mixing mounting portion, the fourth mixing rotating portion being rotatable and creating the stirring hole in the slurry, and a fourth mixing driving portion configured to rotate the fourth mixing rotating portion.

Embodiments include a mixing method for a secondary battery, the method including supplying a slurry to a container part, forming, by a mixing jig part, a stirring hole in the slurry, inputting an additive into the stirring hole, and mixing the slurry and the additive by providing a revolution movement and a rotation movement to the container part. The method may be carried out using the mixing device as defined above or below.

The additive may be supplied by the mixing jig part.

At least some of the above and other features of the invention are set out in the claims.

### BRIEF DESCRIPTION OF THE DRAWINGS

Features will become apparent to those of ordinary skill in the art by describing in detail embodiments with reference to the attached drawings, in which:
FIG. 1 is a schematic view illustrating a state in which slurry is stored in a container part in a mixing device for a secondary battery according to an embodiment of the present disclosure;
FIG. 2 is a schematic view illustrating a state in which a mixing jig part is inserted into the slurry stored in the container part in FIG. 1;
FIG. 3 is a schematic view illustrating a state in which stirring holes are formed in the slurry in FIG. 2;
FIG. 4 is a schematic view illustrating a state in which an additive is input to the stirring holes in FIG. 3;
FIG. 5 is a schematic view illustrating a state in which the slurry and the additive have been stirred by the revolution and rotation of the container part in FIG. 4;
FIG. 6 is a schematic view illustrating a mixing jig part according to an embodiment of the present disclosure;
FIG. 7 is a schematic perspective view illustrating a first mixing portion of a mixing jig part according to a first embodiment of the present disclosure;
FIG. 8 is a schematic side view illustrating the first mixing portion according to the first embodiment of the present disclosure;
FIG. 9 is a schematic view illustrating various shapes of first mixing protrusions in the first mixing portion according to the present disclosure;
FIG. 10 is a schematic perspective view illustrating a second mixing portion of a mixing jig part according to a second embodiment of the present disclosure;
FIG. 11 is a schematic side view illustrating the second mixing portion of the mixing jig part according to the second embodiment of the present disclosure;
FIG. 12 is a schematic cross-sectional view illustrating the second mixing portion of the mixing jig part according to the second embodiment of the present disclosure;
FIG. 13 is a schematic side view illustrating a third mixing portion of a mixing jig part according to a third embodiment of the present disclosure;
FIG. 14 is a schematic side view illustrating a fourth mixing portion of a mixing jig part according to a fourth embodiment of the present disclosure; and
FIG. 15 is a schematic flowchart illustrating a mixing method for a secondary battery according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way. Accordingly, since the embodiments disclosed in the present specification and configurations shown in the drawings are only some of the most preferable embodiments of the present disclosure and do not represent the entire technical disclosure, it should be understood that there are various equivalents and modifications which may replace them at the time of filing the present application.

Further, when used in the present specification, "comprise" or "include" and/or "comprising" or "including" specify the presence of mentioned shapes, numbers, steps, operations, members, elements and/or groups thereof, and do not exclude the presence or addition of one or more other shapes, numbers, steps, operations, members, elements and/or groups thereof.

A mention that two objects to be compared are 'the same' means that that the two objects are 'substantially the same.' Accordingly, 'substantially the same' may include a deviation considered as a low level in the art, for example, a deviation within 5%. Further, uniformity of a parameter in a certain region may mean uniformity from an average point of view.

Although first, second, and the like are used to describe various components, it goes without saying that these components are not limited by these terms. These terms are only used to distinguish one component from another component, and unless otherwise stated, it goes without saying that the first component may be the second component.

Throughout the specification, unless otherwise stated, each component may be singular or plural.

The placement of an arbitrary component on the "upper portion (or lower portion)" of a component or "above (or below)" of a component may mean not only that the arbitrary component is disposed in contact with an upper surface (or a lower surface) of the component, but also that another component may be interposed between the component and the arbitrary component disposed above (or below) the component.

Further, when it is disclosed that a certain component is "on," "connected to," or "coupled to" another component, it should be understood that the components may be directly connected or coupled to each other, but another component may be "interposed" between the components, or the components may be "connected," "coupled," or "linked" through another component.

As used in the present specification, the term "and/or" includes any one or more and all combinations of the related listed items. Further, when embodiments of the present disclosure are described, the use of "may" relates to "one or more embodiments of the present disclosure." The term such as "one or more" before a list of elements modifies an entire list of the elements and does not modify individual elements in the list.

Throughout the specification, "A and/or B" means to A, B, or A and B unless otherwise stated, and "C to D" means greater than or equal to C and less than or equal to D unless otherwise specified.

When phrases such as "at least one of A, B, and C," "at least one of A, B, or C," "at least one selected from group A, B, and C," or "at least one selected from A, B, and C" are used to specify a list of elements A, B, and C, the phrases may refer to any one of all suitable combinations.

The term "use" may be considered to be synonymous with the term "utilize." As used in the present specification, the terms "substantially," "about," and other similar terms are used as terms of approximation rather than terms of degrees, and are intended to consider an inherent variation in measured or calculated values to be recognized by those skilled in the art.

Although the terms "first," "second," "third," and the like may be used in the present specification to describe various elements, components, regions, layers and/or sections, these elements, components, regions, layers and/or sections should not be limited by these terms. These terms are used only to distinguish one element, component, region, drawing layer, or section from another element, component, region, drawing layer, or section. Accordingly, a first element, component, region, layer, or section to be described below may be referred to a second element, component, region, layer, or section without departing from the teachings of the present disclosure.

Spatially related terms such as "beneath," "below," "lower," "above," and "upper" are used for easy description of the relationship of one element or feature to another element or feature shown in the drawings. These spatially related terms are provided for easy understanding of the present disclosure according to various process states or usage states of the present disclosure, and are not intended to limit the present disclosure. For example, when the elements or features in the drawings are reversed, an element described as "lower" or "below" "becomes "upper" or "above." Accordingly, "below" is a concept encompassing "above" or "below."

The terms used in the present specification is intended to describe the embodiments of the present disclosure, and is not intended to limit the present disclosure.

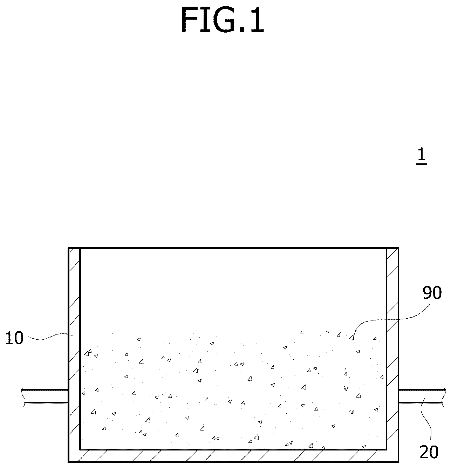

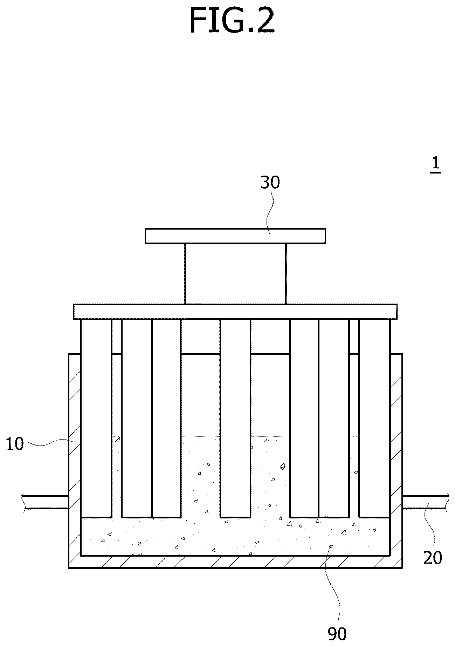

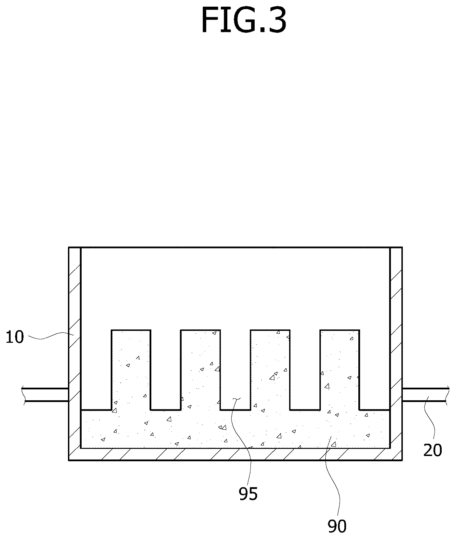

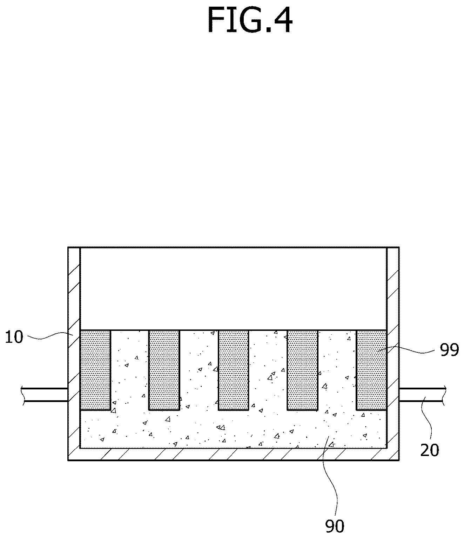

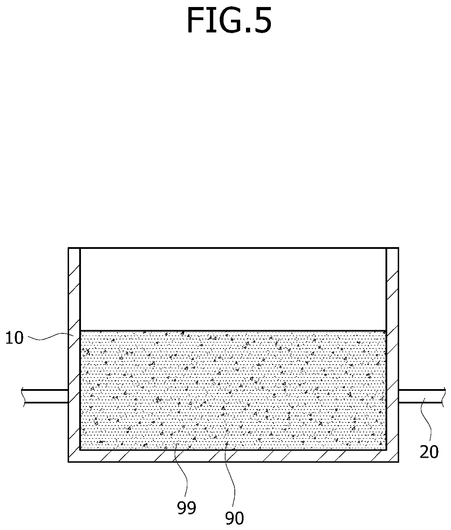

FIG. 1 is a schematic view illustrating a state in which slurry is stored in a container part in a mixing device for a secondary battery according to an embodiment of the present disclosure, and FIG. 2 is a schematic view illustrating a state in which a mixing jig part is inserted into the slurry stored in the container part in FIG. 1. FIG. 3 is a schematic view illustrating a state in which stirring holes are formed in the slurry in FIG. 2, and FIG. 4 is a schematic view illustrating a state in which an additive is input to the stirring holes in FIG. 3. FIG. 5 is a schematic view illustrating a state in which the slurry and the additive have been stirred by the revolution and rotation of the container part in FIG. 4. Referring to FIGS. 1 to 5, a mixing device for a secondary battery according to an embodiment of the present disclosure includes a container part 10, a driving part 20, and a mixing jig part 30.

The container part 10 may provide a space in which a slurry 90 (e.g. a high-viscosity slurry) is stored. A high-viscosity slurry 90 may be similar to a solid mass due to its high solid content and high-viscosity state.

The driving part 20 may rotate the container part 10. The driving part 20 may induce revolution and rotation movements of the container part 10. The driving part 20 may induce the revolution and rotation movements of the container part 10 to mix a small amount of the slurry 90 within a short time without an impeller. A rotation and revolution-type mixer corresponding to the driving part 20 is a device that may stir and deaerate a material at the same time without using a blade for stirring. That is, the revolution movement of the container part 10 may be induced to move the material away from a center, and the rotation movement of the container part 10 may be induced to generate rotation and shearing of the material. The container part 10 may maintain a state in which a rotational axis is inclined. Since the driving part 20 is commercialized, a detailed description thereof will be omitted.

The mixing jig part 30 may be inserted into the container part 10 to form stirring holes 95 in the slurry 90, and thus increase a contact area with an additive 99. That is, after the additive 99 is input into the stirring holes 95, the container part 10 may perform the revolution and rotation movements by the driving part 20. The additive 99 may be a solvent including a binder or an active material.

When the mixing jig part 30 forms the stirring holes 95 in the slurry 90, the additive 99 may be input into the stirring holes 95. In a state in which the additive 99 is input into the stirring holes 95 to increase the contact area with the slurry 90, the additive 99 may be uniformly mixed with the slurry 90 due to the revolution and rotation movements of the container part 10.

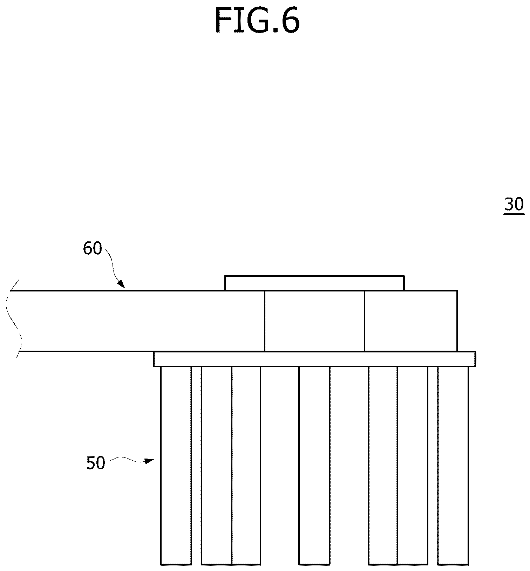

FIG. 6 is a schematic view illustrating a mixing jig part according to an embodiment of the present disclosure. Referring to FIGS. 1 to 6, the mixing jig part 30 according to the embodiment of the present disclosure may include a mixing portion 50 and a jig portion 60.

The mixing portion 50 may be input into the slurry 90 to form the stirring holes 95 in the slurry 90. The mixing portion 50 may be inserted into the container part 10 and pass through the slurry 90, which may be semi-solid (e.g. high viscosity), stored in the container part 10. The mixing portion 50 may cover the container part 10.

The jig portion 60 may move the mixing portion 50. The jig portion 60 may move the mixing portion 50 while holding the mixing portion 50. The jig portion 60 may be a robot arm capable of pressing the mixing portion 50 or applying power to the mixing portion 50 as needed.

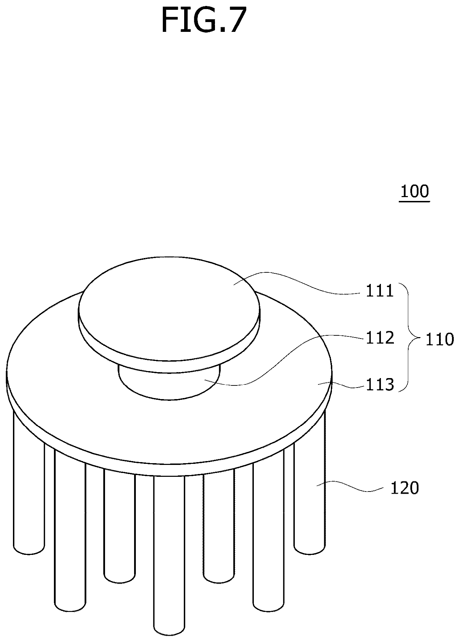

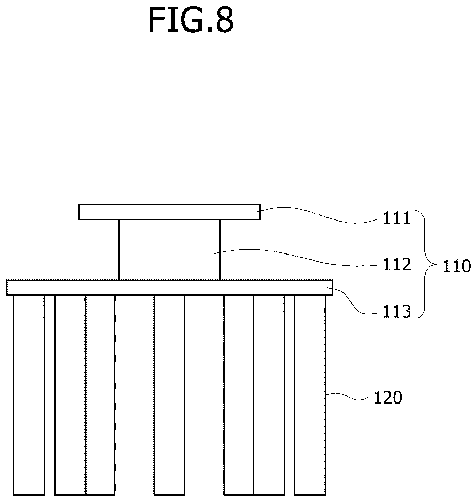

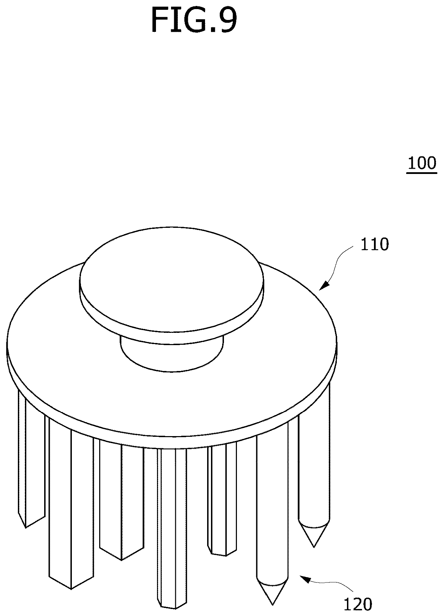

FIG. 7 is a schematic perspective view illustrating a first mixing portion of a mixing jig part according to a first embodiment of the present disclosure, FIG. 8 is a schematic side view illustrating the first mixing portion according to the first embodiment of the present disclosure, and FIG. 9 is a schematic view illustrating various shapes of first mixing protrusions in the first mixing portion according to the present disclosure. Referring to FIGS. 7 to 9, a first mixing portion 100 according to a first embodiment of the present disclosure may be embedded in the slurry 90 by a pressing force to form the stirring holes 95. The first mixing portion 100 may be moved while being held by the jig portion 60, inserted into the container part 10 by an external force by the jig portion 60 or an external force applied by a separate pressing means, and pass through or into the slurry 90.

The first mixing portion 100 may include a first mixing mounting portion 110 and first mixing protrusions 120.

The first mixing mounting portion 110 may be mounted on the jig portion 60. The first mixing mounting portion 110 may be moved by the jig portion 60 and transmit an external force of the jig portion 60 to the first mixing protrusions 120. In addition, the separate pressing means may press the first mixing mounting portion 110 so that the first mixing protrusions 120 may be embedded in the slurry 90.

The first mixing protrusions 120 may be connected to the first mixing mounting portion 110 and form the stirring holes 95 in the slurry 90. Each of the plurality of first mixing protrusions 120 may have a rod shape protruding from the first mixing mounting portion 110.

The first mixing mounting portion 110 may include a first mounting plate 111, a first mounting extension 112, and a first mounting support 113.

The first mounting plate 111 may have a plate shape. The first mounting plate 111 may have a disk shape. An outer diameter of the first mounting plate 111 may be designed to be smaller than an inner diameter of the container part 10.

The first mounting extension 112 may extend from the first mounting plate 111. The first mounting extension 112 may protrude from a central portion of the first mounting plate 111 toward the container part 10. An outer diameter of the first mounting extension 112 may be designed to be smaller than an outer diameter of the first mounting plate 111. The jig portion 60 may hold the first mounting extension 112.

The first mounting support 113 may be formed on the first mounting extension 112, and one or more first mixing protrusions 120 may be connected thereto. The first mounting support 113 may have a plate shape. The first mounting support 113 may have a disk shape. An outer diameter of the first mounting support 113 may correspond to the inner diameter of the container part 10. A sealing member such as silicone or rubber may be disposed on an outer circumferential surface of the first mounting support 113 to maintain airtightness so as to be in close contact with an inner circumferential surface of the container part 10.

The first mixing protrusion 120 may have a circular or polygonal cross section. For example, the first mixing protrusion 120 may have a cylindrical shape or a polygonal column shape. The plurality of first mixing protrusions 120 may have the same shape. In addition, the plurality of first mixing protrusions 120 may include two or more different shapes. A length of the first mixing protrusion 120 may be designed to be smaller than a depth of the container part 10. The number of first mixing protrusions 120 may increase or decrease according to the viscosity of the slurry 90 or working environment.

An end portion of the first mixing protrusion 120 may have a pointed shape. The first mixing protrusion 120 may be formed to be sharper toward the end portion so that the first mixing protrusion 120 may pass through the slurry 90. A horn shape, a cross shape, a straight shape, and the like may be applied to the end portion of the first mixing protrusion 120.

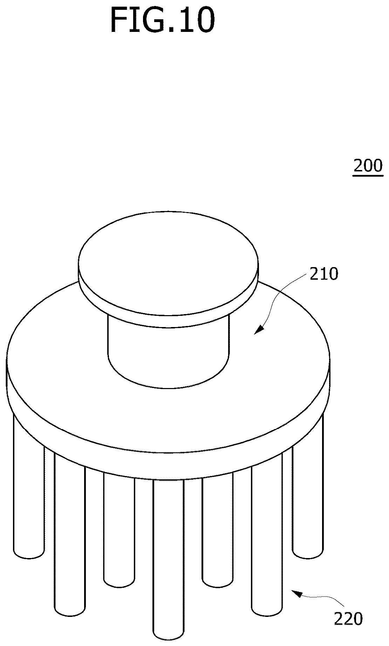

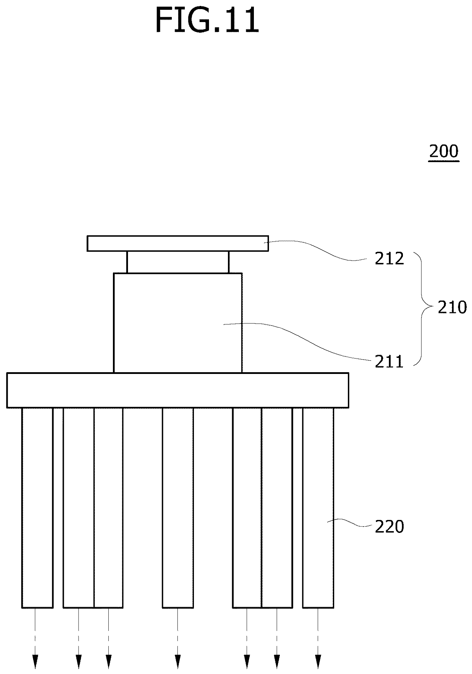

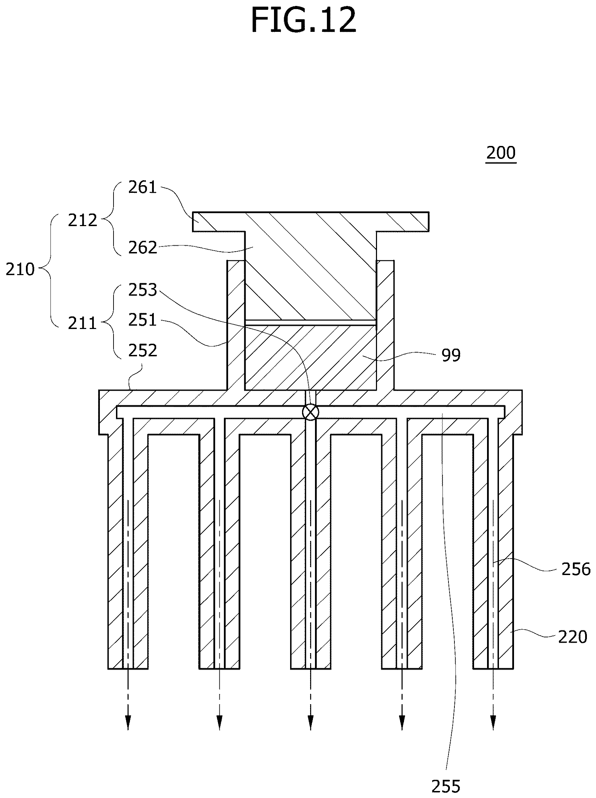

FIG. 10 is a schematic perspective view illustrating a second mixing portion of a mixing jig part according to a second embodiment of the present disclosure, FIG. 11 is a schematic side view illustrating the second mixing portion of the mixing jig part according to the second embodiment of the present disclosure, and FIG. 12 is a schematic cross-sectional view illustrating the second mixing portion of the mixing jig part according to the second embodiment of the present disclosure. Referring to FIGS. 10 to 12, a second mixing portion 200 according to a second embodiment of the present disclosure may form the stirring holes 95 in the slurry 90 and inject the additive 99 into the slurry 90.

The second mixing portion 200 may include a second mixing supply portion 210 and a second mixing discharge portion 220.

The second mixing supply portion 210 may be mounted on the jig portion 60, and the additive 99 may be supplied thereto. A space may be formed in the second mixing supply portion 210 so that the additive 99 is stored therein. In addition, a pipe for supplying the additive 99 may be formed in the second mixing supply portion 210.

The second mixing discharge portion 220 may be connected to the second mixing supply portion 210 and input into the slurry 90 to discharge the additive 99 into the slurry 90. A plurality of second mixing discharge portions 220 may be embedded in the slurry 90 to form the stirring holes 95.

The second mixing supply portion 210 may include a second supply storage portion 211 and a second supply pressing portion 212.

The additive 99 may be stored in the second supply storage portion 211. The second supply storage portion 211 may have a cylindrical shape having one open side. A space for storing a set capacity of the additive 99 may be formed in the second supply storage portion 211.

The second supply pressing portion 212 may press the additive 99 stored in the second supply storage portion 211. The second supply pressing portion 212 may be inserted into the second supply storage portion 211 by the jig portion 60 or a separate pressing means.

The second supply storage portion 211 may include a second storage container portion 251 and a second storage guide portion 252.

The additive 99 may be stored in the second storage container portion 251. The second storage container portion 251 may have a cylindrical shape having one open side to form a space for temporarily storing the additive 99. The jig portion 60 may hold an outer circumferential surface of the second storage container portion 251.

The second storage guide portion 252 may be connected to the second storage container portion 251, and a second passage 255 for guiding the additive 99 to the second mixing discharge portion 220 may be formed therein. When an upper portion of the second storage container portion 251 is open, the second storage guide portion 252 may have a disk shape expanded in a circumferential direction from a lower portion of the second storage container portion 251. The second passage 255 formed inside the second storage guide portion 252 may communicate with the space of the second storage container portion 251 to guide the additive 99. The second passage 255 may be connected to the plurality of second mixing discharge portions 220 connected to the second storage guide portion 252. A discharge passage 256 communicating with the second passage 255 may be formed in the second mixing discharge portion 220.

The second supply storage portion 211 may further include a second storage opening/closing portion 253. The second storage opening/closing portion 253 may open or close the second passage 255 so that the additive 99 passes through the second passage 255 when a pressure is greater than or equal to a set pressure. The second storage opening/closing portion 253 may be a check valve formed in the second passage 255. In addition, the second storage opening/closing portion 253 may be an inclined area or a curved area of the second passage 255 to limit the movement of the additive 99.

The second supply pressing portion 212 may include a second pressing support 261 and a second pressing insertion portion 262.

The second pressing support 261 may have a plate shape. The jig portion 60 or a separate pressing means may hold the second pressing support 261 or provide a pressing force to the second pressing support 261. An outer diameter of the second pressing support 261 may be designed to be greater than an inner diameter of the second storage container portion 251.

The second pressing insertion portion 262 may be connected to the second pressing support 261 and inserted into the second storage container portion 251. An outer diameter of the second pressing insertion portion 262 may correspond to (e.g., match) the inner diameter of the second storage container portion 251. An O-ring member for sealing may be added to an outer circumferential surface of the second pressing insertion portion 262.

When the second supply pressing portion 212 is inserted into the second supply storage portion 211 and presses the additive 99 stored in the second supply storage portion 211, the additive 99 branches into the second mixing discharge portion 220 through the second passage 255, and the additive 99 may be discharged to the stirring holes 95 by the discharge passage 256.

The second mixing discharge portion 220 may correspond to the shape of the first mixing protrusion 120 in FIGS. 7 to 9. The second mixing discharge portion 220 has the same exterior as the first mixing protrusion 120 but may differ in that the discharge passage 256 is formed therein to discharge the additive 99.

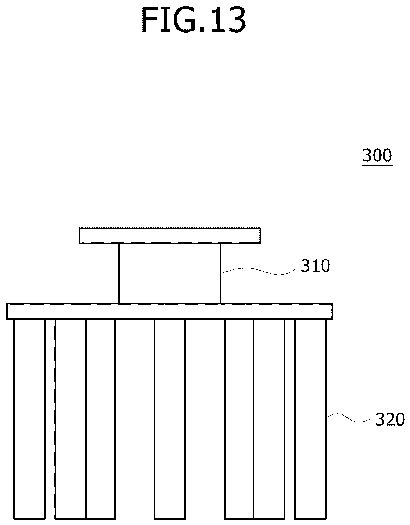

FIG. 13 is a schematic side view illustrating a third mixing portion of a mixing jig part according to a third embodiment of the present disclosure. Referring to FIG. 13, a third mixing portion 300 according to a third embodiment of the present disclosure may be embedded in the slurry 90 to provide vibration energy or ultrasonic energy.

The third mixing portion 300 may include a third mixing generating portion 310 and third mixing transmitting portions 320.

The third mixing generating portion 310 is mounted on the jig portion 60 and may generate vibration energy or ultrasonic energy when power is applied thereto. The third mixing generating portion 310 may correspond to the shape of the first mixing mounting portion 110 illustrated in FIGS. 7 to 9. The third mixing generating portion 310 may differ from the first mixing mounting portion 110 without a vibrator or an ultrasonic element in that a vibrator or ultrasonic element is built thereinto.

The third mixing transmitting portions 320 may be connected to the third mixing generating portion 310, form the stirring holes 95 in the slurry 90, and transmit the vibration energy or ultrasonic energy generated in the third mixing generating portion 310. The third mixing transmitting portion 320 may correspond to the shape of the first mixing protrusion 120 illustrated in FIGS. 7 to 9.

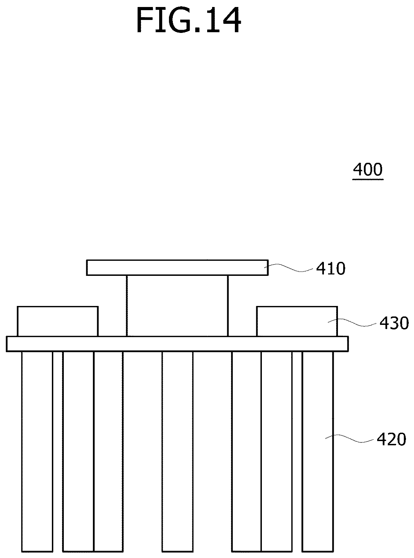

FIG. 14 is a schematic side view illustrating a fourth mixing portion of a mixing jig part according to a fourth embodiment of the present disclosure. Referring to FIG. 14, a fourth mixing portion 400 according to a fourth embodiment of the present disclosure may rotate while embedded in the slurry 90.

The fourth mixing portion 400 may include a fourth mixing mounting portion 410, fourth mixing rotating portions 420, and fourth mixing driving portions 430.

The fourth mixing mounting portion 410 may be mounted on the jig portion 60. The fourth mixing mounting portion 410 may correspond to (e.g., be the same as) the shape of the first mixing mounting portion 110 illustrated in FIGS. 7 to 9.

The fourth mixing rotating portions 420 may be rotatably mounted on the fourth mixing mounting portion 410 and form the stirring holes 95 in the slurry 90. The fourth mixing rotating portion 420 may correspond to the shape of the first mixing protrusion 120 illustrated in FIGS. 7 to 9. However, the fourth mixing rotating portion 420 has a coupling and operating method that is different from that of the first mixing protrusion 120 in that an upper end is rotatably mounted on the mixing protrusions.

The fourth mixing rotating portion 420 may have a screw shape and pass through the slurry 90. In addition, the fourth mixing rotating portion 420 may pass through the slurry 90 while rotating and have various shapes for forming the stirring holes 95. A vibration element or ultrasonic element may be connected to the fourth mixing rotating portion 420 to transmit vibration energy or ultrasonic energy.

The fourth mixing driving portion 430 may rotate the fourth mixing rotating portion 420. The fourth mixing driving portion 430 may be mounted on the fourth mixing mounting portion 410 and connected to the fourth mixing rotating portion 420. The fourth mixing driving portion 430 may be a motor and provide a rotational force to each protrusion of the fourth mixing rotating portion 420.

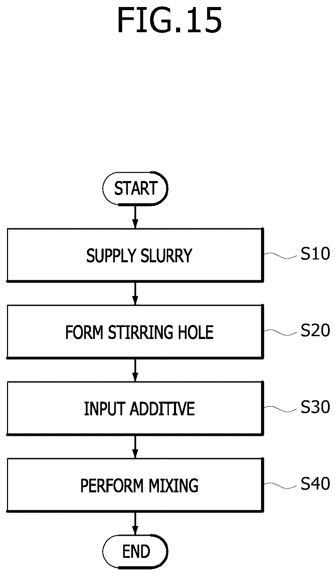

FIG. 15 is a schematic flowchart illustrating a mixing method for a secondary battery according to an embodiment of the present disclosure. Referring to FIGS. 1 to 15, a mixing method for a secondary battery according to the embodiment of the present disclosure includes a supply operation S10, a hole forming operation S20, an input operation S30, and a mixing operation S40.

In the supply operation S10, the slurry 90 may be supplied to the container part 10. A space for storing the slurry 90 is formed in the container part 10, and the driving part 20 may induce the rotation and revolution movements of the container part 10 to smoothly knead, stir or mix the slurry 90. An operator may directly input the slurry 90 into the container part 10. In addition, the slurry 90 may be automatically supplied to the container part 10 through an automated line (see FIG. 1).

In the hole forming operation S20, the mixing jig part 30 may form the stirring holes 95 in the slurry 90. That is, the mixing portion 50 may be inserted into the container part 10 by the jig portion 60 to form the stirring holes 95 in the slurry 90 (see FIGS. 2 and 3).

The first mixing portion 100 may be embedded in the slurry 90 by an external force to form the stirring holes 95. The second mixing portion 200 may be embedded in the slurry 90 by a pressing force to form the stirring holes 95. The third mixing portion 300 may be embedded in the slurry 90 using a pressing force, vibration energy, or ultrasonic energy to form the stirring holes 95. The fourth mixing portion 400 may pass through or into the slurry 90 by a pressing force and a rotational force to form the stirring holes 95.

In the input operation S30, the additive 99 may be input into the stirring holes 95 (see FIG. 4). When the stirring holes 95 are formed using the first mixing portion 100, the first mixing portion 100 may be removed, and then the additive 99 may be input into the stirring holes 95. When the stirring holes 95 are formed using the second mixing portion 200, the additive 99 injected from the second mixing portion 200 may be input into the stirring holes 95. When the stirring holes 95 are formed using the third mixing portion 300, the third mixing portion 300 may be removed, and then the additive 99 may be input into the stirring holes 95. When the stirring holes 95 are formed using the fourth mixing portion 400, the fourth mixing portion 400 may be removed, and then the additive 99 may be input into the stirring holes 95.

In the mixing operation S40, revolution and rotation movements may be provided to the container part 10 to mix the slurry 90 and the additive 99 (see FIG. 5).

In the mixing device and method for a secondary battery according to the embodiment of the present disclosure, as the stirring holes 95 are formed in the slurry 90 at the beginning of mixing and the additive 99 is input into the stirring holes 95, a contact area between the stirring holes 95 and the additive 99 may increase, and thus the stirring performance of the slurry 90 may be improved.

In the mixing device and method for a secondary battery according to some embodiments of the present disclosure, since the additive 99 may be stored in the second mixing portion 200, itself forming the stirring holes 95 in the slurry 90, the formation of the stirring holes 95 and the input of the additive 99 may be simultaneously performed, and thus the working time may decrease.

Recently, as the amount of active material has increased and the amount of binder solvent has decreased, a solid slurry having high viscosity has been used. Since the solid slurry having high viscosity is close to a solid mass, sufficient kneading and dispersibility between the active material and the binder is required.

The present disclosure is directed to providing a mixing device and method for secondary batteries capable of ensuring kneading and dispersibility of a binder and an active material in a slurry.

However, technical effects acquirable through the present disclosure are not limited to the above-described technical effects, and other technical effects which are not mentioned will be clearly understood by those skilled in the art from the description of the disclosure described below.

Although the present disclosure has been described with reference to the embodiments shown in the drawings, these are merely examples, and it should be understood by those skill in the art that various modifications and equivalents are possible.

Accordingly, the technical scope of the present disclosure should be defined by the following claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A mixing device for a secondary battery, the mixing device comprising:
a container part storing a slurry;
a driving part configured to rotate the container part; and
a mixing jig part in the container part,
wherein the slurry has a stirring hole therein, the mixing jig part creating the stirring hole in the slurry, the stirring hole increasing a contact area of the slurry for an additive.

2. The mixing device as claimed in claim 1, wherein the driving part is configured to provide a revolution movement and a rotation movement to the container part.

3. The mixing device as claimed in claim 1 or claim 2, wherein the mixing jig part includes:
a mixing portion in the slurry creating the stirring hole; and
a jig portion configured to move the mixing portion.

4. The mixing device as claimed in claim 3, wherein the mixing portion includes a first mixing portion pressed into the slurry to create the stirring hole.

5. The mixing device as claimed in claim 4, wherein the first mixing portion includes:
a first mixing mounting portion on the jig portion; and
a first mixing protrusion connected to the first mixing mounting portion to create the stirring hole in the slurry.

6. The mixing device as claimed in claim 5, wherein the first mixing mounting portion includes:
a first mounting plate;
a first mounting extension extending from the first mounting plate; and
a first mounting support on the first mounting extension, the first mounting support having one or more first mixing protrusions connected thereto.

7. The mixing device as claimed in any one of claims 3 to 6, wherein the mixing portion includes a second mixing portion configured to inject the additive into the slurry.

8. The mixing device as claimed in claim 7, wherein the second mixing portion includes:
a second mixing supply portion on the jig portion, the second mixing supply portion being for supplying the additive; and
a second mixing discharge portion connected to the second mixing supply portion, the second mixing discharge portion being in the slurry and being configured to discharge the additive into the slurry.

9. The mixing device as claimed in claim 8, wherein the second mixing supply portion includes:
a second supply storage portion for storing the additive; and
a second supply pressing portion that is configured to press the additive stored in the second supply storage portion.

10. The mixing device as claimed in claim 9, wherein the second supply storage portion includes:
a second storage container portion for storing the additive; and
a second storage guide portion connected to the second storage container portion, the second storage guide portion having a second passage configured to guide the additive to the second mixing discharge portion.

11. The mixing device as claimed in any one of claims 3 to 10, wherein the mixing portion includes a third mixing portion in the slurry, the third mixing portion configured to provide vibration energy or ultrasonic energy.

12. The mixing device as claimed in claim 11, wherein the third mixing portion includes:
a third mixing generating portion on the jig portion, the third mixing portion configured to generate vibration energy or ultrasonic energy when power is applied; and
a third mixing transmitting portion that is connected to the third mixing generating portion, the third mixing transmitting portion creating the stirring hole in the slurry and transmitting the vibration energy or the ultrasonic energy generated by the third mixing generating portion.

13. The mixing device as claimed in any one of claims 3 to 12, wherein the mixing portion includes a fourth mixing portion configured to rotate the slurry while in the slurry.

14. The mixing device as claimed in claim 13, wherein the fourth mixing portion includes:
a fourth mixing mounting portion on the jig portion;
a fourth mixing rotating portion on the fourth mixing mounting portion, the fourth mixing rotating portion being rotatable and creating the stirring hole in the slurry; and
a fourth mixing driving portion configured to rotate the fourth mixing rotating portion.

15. A mixing method for a secondary battery, the method comprising:
supplying a slurry to a container part;
forming, by a mixing jig part, a stirring hole in the slurry;
inputting an additive into the stirring hole; and
mixing the slurry and the additive by providing a revolution movement and a rotation movement to the container part.
